# EUROPEAN PATENT APPLICATION

(11) **EP 4 024 497 A1**
(43) Date of publication of application: **06.07.2022**
(21) Application number: 21216893.4
(22) Date of filing: 22.12.2021
(51) Int. Cl.: H01M 4/04, H01M 4/134, H01M 4/1395, H01M 4/38, H01M 4/62, H01M 10/0525, H01M 4/02

(54) **ELASTIC ANODE BINDER FOR SECONDARY LITHIUM ION BATTERY**

(30) Priority: 30.12.2020 US 202063131883 P
(71) Applicant: Kokam Co., Ltd., Gyeonggi-do 16201 (KR)
(72) Inventor: HEO, Yoon-Jeong, 16201 Suwon-si (KR); KO, Sung-Tae, 16201 Suwon-si (KR); SUNG, Chae-Yong, 16201 Suwon-si (KR); WOO, Ji-Su, 16201 Suwon-si (KR)
(74) Representative: V.O.

(57) **Abstract**

An electrochemical cell is prepared from a silicon-based anode active material and a polyimide-based binder prepared by curing polyamic acid with heat and/or with a catalyst. The silicon-based material may be silicon suboxide. Anodes prepared with combinations of an elastic polyimide-based binder and anode active material improve specific capacity, cycle characteristics, and electrical properties in secondary lithium batteries.

## Description

### BACKGROUND

The present disclosure relates to an anode comprising a silicon-based anode active material and an elastic polyimide-based binder, as well as a method for production of the same.

Batteries may be used in apparatuses such as automobiles, robots, satellites, and portable electronics, such as notebook computers, cameras, mobile phones, MP3 players, etc. Batteries may be classified into primary batteries and secondary batteries, where secondary batteries are rechargeable and capable of storing energy, as well as repeated charging and discharging. Existing commercially available secondary batteries include, for example, nickelcadmium batteries, nickel-hydride batteries, zinc batteries, and lithium batteries. Among them, lithium secondary batteries have a low self-discharging rate and a high energy density. A high energy density battery system is attributing in high part of power-consuming applications and the demand is increasing in greater energy levels, high specific capacity and cycle characteristics.

Lithium secondary batteries may contain a lithium-based oxide and a carbon-based material as a negative electrode active material and a positive electrode active material, respectively. The lithium secondary batteries may include an electrode assembly such as a positive electrode current collector and a negative electrode current collector. The current collectors may be respectively coated with a positive electrode (anode) active material and a negative electrode (cathode) active material, and may be disposed with a separator interposed therebetween. An outer casing may hermetically seal therein the electrode assembly together with an electrolyte solution. Lithium secondary batteries may be classified into different types, such as a lithium ion battery (LIB), a polymer lithium ion battery (PLIB), or the like, depending on the types of the anode active material and the cathode active material used therein. Typically, the electrodes of lithium secondary batteries may be formed by applying an anode or cathode active material to a current collector such as an aluminum or copper sheet, a mesh, a film, or a foil, and then drying the active material.

A single battery cell may be used as a secondary battery, or two or more battery cells may be connected in series and/or in parallel in a single battery module. The battery module may output higher power or store more energy than a single cell. Battery systems may be used in large-sized equipment with a suitable large size or number of battery modules. When the battery system of large equipment uses output high power and/or large capacity batteries, multiple battery cells may be used connected in series and/or in parallel.

### BRIEF SUMMARY OF THE INVENTION

The following presents a simplified summary of disclosed aspects in order to provide a basic understanding of these aspects. This summary is not an extensive overview of the aspects. It is not intended to identify key or critical elements or to delineate the scope of the disclosure.

Aspects of the disclosure relate to an elastic polyimide-based binder to prevent deterioration and to improve electrical properties, e.g. specific capacity, of lithium secondary batteries having a silicon-based anode active material, in particular, a silicon suboxide anode active material. Further aspects relate to a method of forming an anode by adding a polyimidized resin as a binder to the anode comprising a silicon-based active material. Further aspects relate to lithium secondary batteries prepared with silicon-based anode active material and an elastic polyimide-based binder.

Specifically, structural stress on the binder resin may be alleviated by adhesion between a current collector, such as a copper or aluminum foil, and the binder resin, preventing systematic deterioration of the anode. Moreover, the binder resin may play a role of an active material, having the characteristic for releasing and blocking lithium ions (to enhance battery performance).

Disclosed herein are secondary lithium batteries having electrical properties with the following aspects: (1) degree of imidization where (a) adhesion between an anode mixture and a current collector varies depending on the degree of imidization of polyamic acid (PAM), and (b) the electrical properties improve when the polyimide-based binder has a degree of imidization between 15% and 100%, preferably between 15% and 50%; and (2) properties of polyimide-based binder and various silicon and graphite ratios wherein (a) polyimide (PI) may be prepared by curing PAM by heat or catalyst, and (b) PAM may be prepared by polymerizing a diamine monomer with a tetracarboxylic dianhydride monomer.

### BRIEF DESCRIPTION OF THE DRAWINGS

A more complete understanding of the aspects and the advantages thereof may be acquired by referring to the following description in consideration of the accompanying drawings, in which like reference numbers indicate like features, and wherein:
Fig. 1 shows schematically an anode for a lithium ion battery including a polyimide-based binder.
Fig. 2 shows schematically a lithium ion battery including a polyimide (PI)-based binder.
Fig. 3 shows a graph comparing specific capacity values as C-rate increases of silicon suboxide anodes prepared with a conventional binder and a PI-based binder in accordance with the disclosure.
Figs. 4A and 4B show comparison in the current rate testing constituted half-cell of Comparative Example 1 and Example 1 between the combination of a conventional anode with silicon suboxide and with the use of PI-based binder.
Fig. 5 shows a graph comparing the relative capacity over the number of cycles in different anode active material combinational ratio.
Fig. 6 shows a graph comparing the relative capacity over the number of cycles in different anode active material combinational ratio specifically with the use of PI-based binder.
Fig. 7 shows a graph depicting the degree of imidization of polyamic acid (PAM) binders at different temperatures.
Fig. 8 shows a graph comparing the degree of imidization at each temperature and comparing relative capacity after 100 cycles.

### DETAILED DESCRIPTION OF THE INVENTION

In the following description of the various aspects, reference is made to the accompanying drawings, which form a part hereof, and in which is shown by way of illustration of various aspects. It is to be understood that other aspects may be utilized, and structural and functional modifications may be made without departing from the scope of the present disclosure. Unless defined otherwise, all technical and scientific terms used herein have the same meaning as commonly understood by one of ordinary skill in the art to which this disclosure belongs.

The anode is typically made of an anode active material and a binder. The anode includes anode material that changes shape/size/volume during cycling or aging. Importantly, the anode may have an elastic property to avoid cracking or failing during use. Binders used for Si-based anodes may control particle expansion and shape changes, as well as keep the active particles together upon lithiation, thus preserving the electrode integrity and effectively increasing cycle life. The elastic nature of the anode may be indicated by tensile strength and elastic elongation properties.

Conventional graphite-based anode active materials may have certain limitations in improving capacities of secondary lithium batteries. Si-based anode active materials may provide improved function over conventional graphite-based anode active materials.

Known Si-based anode active materials are included in TABLE 1.

**TABLE 1**

| Type | SiC composite | SiOx | Si-alloy |
|---|---|---|---|
| Specific capacity^{∗} | ~500 mAh/g | ~1,500 mAh/g | ~1,500 mAh/g |
| Properties | - No difficulty in a combinational use with graphite-based materials due to its similar surface attributes | - Its high specific capacity enlarges the efficacy on increasing capacity of a battery | - Its high specific capacity enlarges the efficacy on increasing capacity of a battery |
| | - Relatively low volumetric change rate | - Moderate volumetric increase rate | - Largest volumetric increase rate |
| | - Relatively good lifetime characteristics | - Moderate lifetime characteristics | - Poor lifetime characteristics |
| | - Due to its low specific capacity, an | | |
| | excess (of 50% or more) is needed to be effective for the capacity improvement | | |

| | | | |
|---|---|---|---|
| ^{∗} Specific capacity in milli-amp-hours per gram (mAh/g) | | | |

Silicon-based anode materials may be applied for lithium secondary batteries due to a high energy density. Research is active for silicon-based anode active materials, particularly silicon carbide, silicon suboxide, and silicon alloy, and silicon suboxides. Silicon suboxides may be defined as SiOx, 0 < x < 2.

Silicon suboxide as an anode active material may have a high specific capacity characteristic, moderate volumetric increase rate, and moderate lifetime characteristics which may enlarge the efficacy on increasing capacity in secondary lithium battery. However, commercialization has been difficult for secondary lithium ion batteries with an anode active material of silicon suboxide due to low electronic conductivity and sluggish electron transport kinetics which may lead to electrical contact loss and poor cycle characteristics.

Silicon-based anode active materials (as well as other anode active materials) may change shape, size, or volume during cycling or aging. For example, silicon suboxide-based anode material may suffer from poor cycle characteristics which may deteriorate battery life upon charging and discharging at high currents. The charge and discharge cycles may cause cracking of the anode, loss of adhesion between an anode active material and a current collector, binder failure, active material particle cracking, sheer stresses between binder and active material particles, etc. Therefore, it may be desirable that the binder have elastic properties to accommodate the shape/size/volume changes of the anode during use.

To limit the silicon-based anode from cracking or failing during use, an elastic anode binder is used to form the anode. A polyimide (PI)-based binder for lithium secondary batteries may prevent deterioration of silicon-based anode active material (such as silicon suboxide, silicon carbide, etc.) electrodes and may improve electrical properties such as specific capacity of the battery. Electrical properties of secondary lithium batteries are affected by the amount of silicon suboxide anode active material, and the degree of imidization and properties of PI-based binder. The silicon anodes undergo repeated and rapid expansion and contraction due to the storage and release of lithium ions, thus separating from the binder. However, silicon suboxide-based anode material may suffer from poor cycle characteristics which may deteriorate upon charging and discharging at a high speed. In general, silicon suboxide active materials have higher gravimetric theoretical lithium storage compared to conventionally used graphite anodes, while having a relatively low discharge voltage. On the other hand, silicon undergoes an enormous volumetric change during lithiation. Furthermore, a combination of silicon (possibly with conventional graphite) as anode active material and PI-based binder may further improve both the specific capacity and electrical properties.

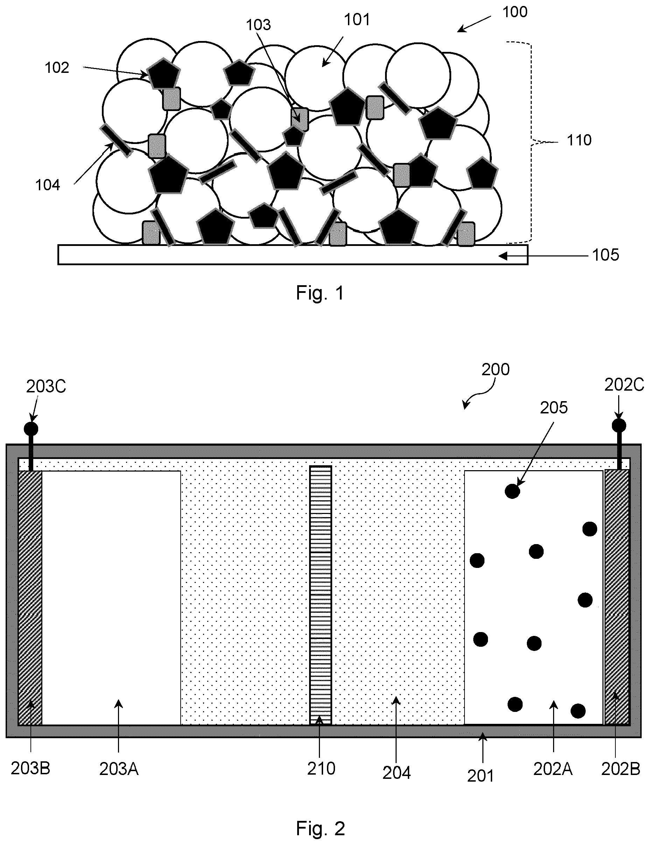

Reference is now made to Fig. 1, which shows schematically an anode 100 for a lithium ion battery including a PI-based binder 102. In this example, the PI-based binder 102 is incorporated into the active material layer 110 of the anode 100. The anode 100 includes a current collector 105. The active material layer 110 includes active material particles 101. For example, active material particles 101 may include a carbon-based material and a silicon-based material. The active material layer 110 includes PI-based binder 102. The active material layer 110 may include other additives 103 and conductive additive material 104. Active material layer 110 may have an average thickness of 20 to 500 micrometers (µm).

Polyvinylidene fluoride (PVDF) and styrene-butadiene rubber (SBR) / sodium carboxymethyl cellulose (CMC) are mainly used as binders in the battery field and exhibit good binding characteristics and efficiency in carbonaceous electrode materials. However, when the silicon-based active material is used as an electrode material, the volume expansion/shrinkage during charging and discharging is so large that it is difficult to maintain mechanical properties and adhesion with the PVDF and SBR-CMC binders.

It was discovered that using a PI-based binder in the anode containing silicon suboxide improves electrical properties of lithium secondary battery. A PI-based binder has elastic properties that maintain the mechanical integrity of the anode while the anode changes shape/size/volume during cycling or aging. As used herein, the term elastic means capable of returning to its original length, shape, etc., after a lithium secondary battery has contracted or expanded due to charging, discharging or aging. The PI-based binders may provide excellent adhesion and process handling properties. The PI-based binders may improve adhesion and provide improved tensile strength, elongation, and electrical properties.

Lithium secondary batteries may be formed from electrochemical cells comprising an anode, a cathode, a separator, and an electrolyte.

Reference is made to FIG. 2, which shows schematically a lithium ion battery 200 including a PI-based binder 205. Lithium ion battery 200 includes a case 201, a cathode active material 203A, a cathode current collector 203B, a positive terminal 203C, a separator 210, an anode active material 202A, an anode current collector 202B, a negative terminal 202C, and an electrolyte 204. A PI-based binder 205 may be included in the anode active material 202A.

An anode includes an anode active material, a binder and, optionally, a conductive agent. The anode active material composition may be molded into a desired shape or coated on a current collector.

The anode current collector may be any suitable anode current collector, so long as it is conductive and does not cause chemical reactions, such as copper, stainless steel, aluminum, nickel, titanium, sintered carbon, copper or stainless steel that is surface-treated with carbon, nickel, titanium, or silver, and aluminum-cadmium alloys. The anode current collector may be formed with a slightly roughened surface to enhance the adhesion of the anode active material to the current collector. Suitable anode current collectors may be formed of conductive films, sheets, foils, nets, porous structures, foams, and non-woven fabrics. For example, current collectors include metals, such as copper or aluminum.

The anode active material may be silicon suboxide alone or in combination with another conductive anode material known for use in lithium batteries.

Suitable other conductive anode materials may be carbonaceous materials such as graphite, carbon black, acetylene black and carbon fibers; metal powders or fibers of metals such as copper, nickel, aluminum, or silver; conductive polymers such as lithium ion, polypyrrole, polythiophene and mixtures thereof. The electrical properties may vary depending on the mixing rate of silicon suboxide and the other conductive anode material.

A PI-based binder may be used with an anode active material comprising silicon suboxide. The PI binder may be prepared by curing polyamic acid (PAM) using heat or with a catalyst.

An anode may be prepared with the anode active material containing silicon suboxide and a PI-based binder. An electrochemical cell may be prepared with the prepared anode. A lithium secondary battery may be made with the prepared electrochemical cell.

The use of different ratio combinations of silicon and graphite may determine which factors show the most promising specific capacities and cycle characteristics.

The adhesion between an anode active material layer and a current collector may vary depending on the degree of imidization of PAM, thereby showing different electrical properties of the secondary batteries. Further, when the viscosity is too high or low, the dispersibility at the time of preparing slurries and the adhesion of the electrode mixtures may deteriorate. Generally, high tensile strength has better durability, and high elongation may be more effective for responding to the volumetric change of the anode active material upon charging/discharging.

When a polyimide is used as a binder, electrical properties of a lithium secondary battery may not deteriorate when silicon suboxide is used as an anode active material and capacity may be improved. The use of PI-based binder with silicon suboxide and graphite anode active materials may further improve the electrical properties of the relevant lithium secondary battery.

The anode may be manufactured by mixing the anode active material, binder, optional conductive agent, and a solvent.

The solvent may be any suitable solvent such as organic solvents (e.g. N-methyl pyrrolidone (NMP) or acetone), water, buffer solution, ethylene carbonate (EC), and ethylmethyl carbonate (EMC).

The anode active material composition may include other additives, such as adhesion promoter layer made of carbon and polyacrylic acid by treating this layer with LiOH, or is selected from the group consisting of silanes, titannates, phosphates, and combinations thereof.

The binder for silicon suboxide anode active material is a PI-based binder having the general structure:

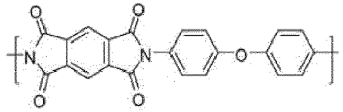

The PI-based binder may be prepared by curing polyamic acid (PAM) having the general structure:

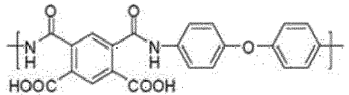

PAM may be prepared by polymerizing a diamine monomer with a tetracarboxylic dianhydride monomer. Suitable diamine monomers include, but are not limited to, phenylenediamine (PDA). Suitable tetracarboxylic dianhydride monomers include, but are not limited to, biphenyl-tetracarboxylic acid dianhydride (BPDA). The PAM solution may be obtained by dissolving the precursor monomers in an organic polar solvent N-methly-2-pyrrolidone (NMP). To convert PAM into PI, the solution is heated up to remove NMP and induce the imidization through evaporation of water molecules. The imidization cure is necessary to drive off solvent, with a boiling point of 202 degrees Celsius (°C) for NMP, and to achieve the conversion of PAM into PI by the formation of the imide rings.

The structure of BPDA-PDA:

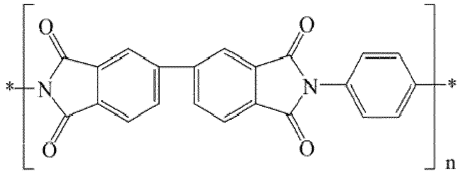

PAM may be prepared by polymerizing a diamine monomer with a tetracarboxylic dianhydride monomer. The PAM may be cured by heat and/or using a catalyst. Generally, PAM is cured at a temperature of 250 °C to 450 °C to form polyimide, with N,N'-dimethylethanolamine (DMEA) used as a catalyst.

The degree of imidization of the PI-based binder may be between 15% and 100%, preferably between 15% and 50%. Hence, the PI-based binders encompass not only PIs, but also PAMs or those wherein the amic acidic groups of PAM are partly imidized. While the increase of the degree of imidization may lead to a consistent increase in strength and enhances the adhesion between the mixtures, it presumably deteriorates the adhesion between the anode active material layer and the current collector.

The electrical properties may be affected by the amount of silicon suboxide in the anode active material, and degree of imidization and properties of the PI-based binder. The electrical performance of secondary lithium batteries heavily relies on the adhesion between the anode active material layer and current collector.

The PI-based binders have excellent adhesion and process handling properties within a certain viscosity range from 3500 to 8000 centipoise (cP) measured at 22 ~ 26 °C. When the viscosity is too low, dispersibility at the time of preparing slurries and adhesion of the electrode active material layer deteriorates. When the viscosity is too high, dispersibility at the time of preparing slurries may deteriorate, as may adhesion of the active material layer onto the current collector.

The PI-based binders may improve adhesion within a certain range of tensile strength and elongation, and electrical properties. Higher tensile strength may lead to a better durability, and the higher elongation may be more effective for responding to the volumetric change of the anode active material upon charging and discharging. The lifetime characteristic is excellent when tensile strength of a binder is 70 megapascal (MPa) or more, preferably between 80 MPa and 100 MPa. Also, when elongation of a binder is 20% or more, specifically between 35% and 55%, the process handling properties may improve.

An electrochemical cell may be formed from an alkali metal anode and a cathode on which the solvent material is catalytically reduced. The cathode may be prepared from a catalytic cathode material such as gold, carbon, and carbon tetrafluoride and an electrolyte containing an inorganic solvent such as phosphorous oxychloride, thionyl chloride, sulfuryl chloride, and mixtures thereof, and a solute dissolved in the solvent.

### Example 1 and Comparative Example 1

### Example 1

A PI-based binder was used in combination with silicon suboxide. In particular, an anode mixture (such as a slurry) was prepared with silicon suboxide (95 wt%) and PAM (5 wt%). The monomers of PAM were biphenyl-tetracarboxylic acid dianhydride (BPDA) and phenylenediamine (PDA). The anode mixture was applied to a current collector by slurry casting of (10 µm Cu-foil) and dried by convection oven (at ~130 °C for 10min), pressed, and then vacuum dried (at 130 °C for 12hr). The PAM is imidized during vacuum dry.

### Comparative Example 1

A conventional binder was used in combination with silicon suboxide, in particular, an anode mixture was prepared with silicon suboxide (96 wt%) and carboxymethyl cellulose (CMC) (1.5 wt%) + styrene-butadiene rubber (SBR) (2.5 wt%). The anode mixture was applied to a current collector by slurry casting of (10 µm/Cu-foil) and dried in a convection oven (at ~130 °C for 10min), pressed, and then vacuum dried (at 130 °C for 12hr).

As used herein, half-cell test for lithium secondary batteries is conducted before full-cell test to calculate the ratio of anode and cathode materials through specific capacity. The performance of full-cell test is determined by the combination of two different electrodes.

The anodes prepared in Comparative Example 1 and Example 1 were each used to prepare a half-cell, and then a current rate test of the half-cell was conducted. The reference electrode was Li-metal (FMC), the electrolyte was 1.15M LiPF6 in the solvent ethylene carbonate (EC) and ethyl methyl carbonate (EMC) EC:EMC=1:7. The test conditions of the charging method were constant-current and constant-voltage (CCCV) at 0.1C with a voltage of 0.005 V, 1/20C cut-off @ 25±3 °C and the discharging method was constant-current (CC), 0.1 ~ 1.0C, 1.5 V cut-off @ 25±3 °C.

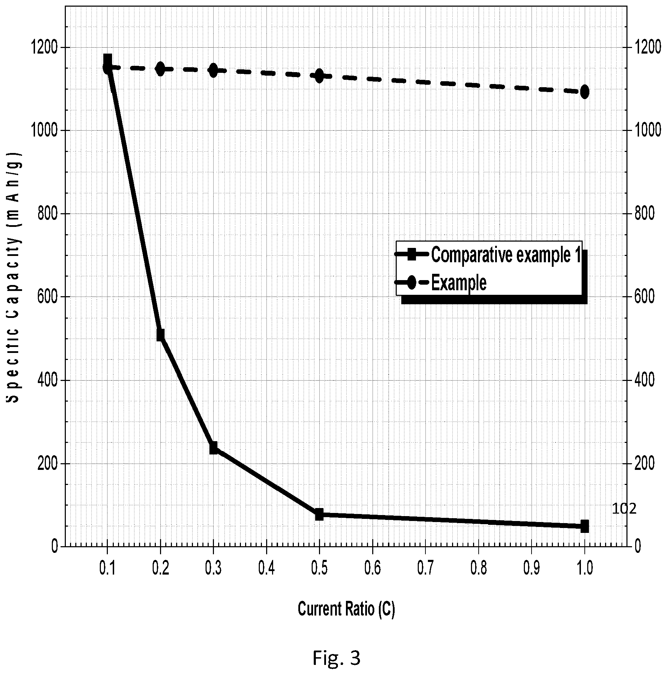

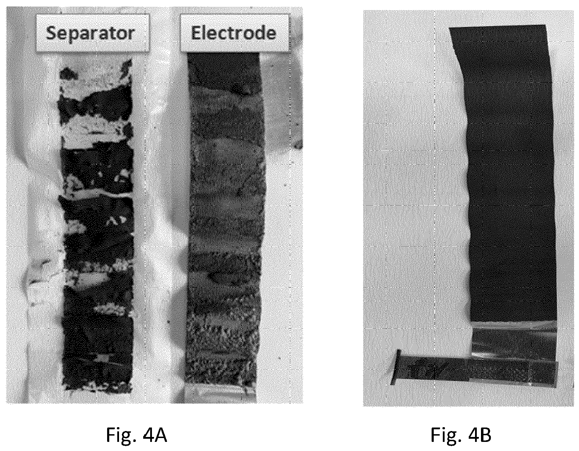

Fig. 3 depicts specific capacity as a function of current ratio. Comparison of Comparative Example 1, wherein a conventional binder was used in combination with silicon suboxide, with Example 1, wherein a PI-based binder was used in combination with silicon suboxide, shows that as the current ratio increases, the specific capacity decreases remarkably in Comparative Example 1, but the specific capacity decreases relatively less in the case of the PI-based binder. Thus, when silicon suboxide is used as an anode active material, the use of a PI-based binder may lead to improvement of the specific capacity and high-speed charging/discharging characteristic. Fig. 4A and 4B depict the electrode after tests were completed for Comparative Example 1 and Example 1, respectively.

### Examples 2-5 and Comparative Examples 2-4

Anode mixtures were prepared with an anode active material and a binder in accordance with TABLE 2 below.

**TABLE 2**

| | Anode Active Material | | Type of Binders |
|---|---|---|---|
| | Ratio of SiOx amount (wt%) | Ratio of graphite amount (wt%) | |
| Example 2 | 10 | 90 | PAM |
| Example 3 | 15 | 85 | PAM |
| Example 4 | 20 | 80 | PAM |
| Example 5 | 30 | 70 | PAM |
| Comparative Example 2 | - | 100 | PAM |
| Comparative Example 3 | 10 | 90 | CMC+SBR |
| Comparative Example 4 | 20 | 80 | CMC+SBR |

The ratio of anode active material to the binder was 95 wt.% : 5 wt%. The ratio of CMC : SBR was 2 wt% : 3 wt%. The graphite was synthetic graphite AML800 (Kaijin). The suboxide was DMSO (DAEJOO ELECTRONIC MATERIALS). The CMC was MAC-350HC (Nippon paper). The SBR was A200 (Hansol Chemical). The monomers of PAM were biphenyl-tetracarboxylic acid dianhydride and phenylenediamine (BPDA and PDA.)

Each anode mixture of Comparative Examples 2 and 3 and Examples 2 to 5 was used to prepare an anode, which was used to constitute a half-cell. In particular, an anode was prepared by slurry casting of the anode mixture on the current collector (10 µm Cu-foil (Furukawa)), convection oven drying (at ~130 °C for 10 minutes), pressing, and vacuum drying (at 130 °C for 12 hours). A half-cell constituted the anode, reference electrode Li-metal (FMC), and electrolyte (1.15M LiPF6 in the solvent EC : EMC=1:7).

The specific capacity was measured with different charging speeds based on the half-cell and the results are shown in TABLE 3. The test conditions of the charging method were constant-current and constant-voltage (CCCV), measured at each current, 1/20C cut-off, rest time for 10 minutes and the discharging method was constant-current (CC) at each current, and 1.5 V cut-off.

**TABLE 3**

| | Specific capacity (mAh/g) | | | | |
|---|---|---|---|---|---|
| | 0.1C | 0.2C | 0.3C | 0.5C | 1.0C |
| Example 2 | 415.5 | 418.3 | 415.2 | - | 414.7 |
| Example 3 | 453.9 | 449.6 | 444.4 | 442.1 | 436.9 |
| Example 4 | 503.1 | 486.6 | 478.5 | 466.8 | 462.0 |
| Example 5 | 597.0 | 575.3 | 556.1 | 535.4 | 519.2 |
| Comparative Example 2 | 332.0 | 335.3 | 335.3 | 335.7 | 335.7 |
| Comparative Example 3 | 411.5 | 397.9 | 390.8 | 381.6 | 376.8 |
| Comparative Example 4 | 500.6 | 469.7 | 453.9 | 437.5 | 422.2 |

A conductive material was added to the anode mixture of Comparative Examples 2 and 3 and Examples 2 to 5 to prepare an anode and constitute a full-cell with a lithium manganese nickel cobalt oxide (NMC)-based cathode. Then, a change in relative capacity was measured based on the full-cell with a repeated charge/discharge cycle.

A ratio of NMC622 (KHX12/Umicore) was used for the cathode active material, and aluminum foil (20 µm from *ShamA Aluminum*) was used for the cathode current collector. The cathode combinational ratio was NMC622 94% + Denka Black 3% + PVFd 3%.

The anode combinational ratio was composed of active material 92% + Denka Black 3% + Binder 5%. The slurry casting of the anode mixture on the current collect (10 µm Cu-foil from *Furukawa)* was dried in the convection oven at 130 °C for 10 minutes then pressed and vacuum dried for 12 hours at 130 °C.

The electrolyte was 1.15M of LiPF₆ in the solvent EC : EMC = 1 : 7.

The test conditions of the experiment were the charging method of CCCV, 10C, 4.2 V, 1/20C cut-off, rest time for 10 minutes, and the discharging method of CC, 1.0 V, 2.7 V cut-off.

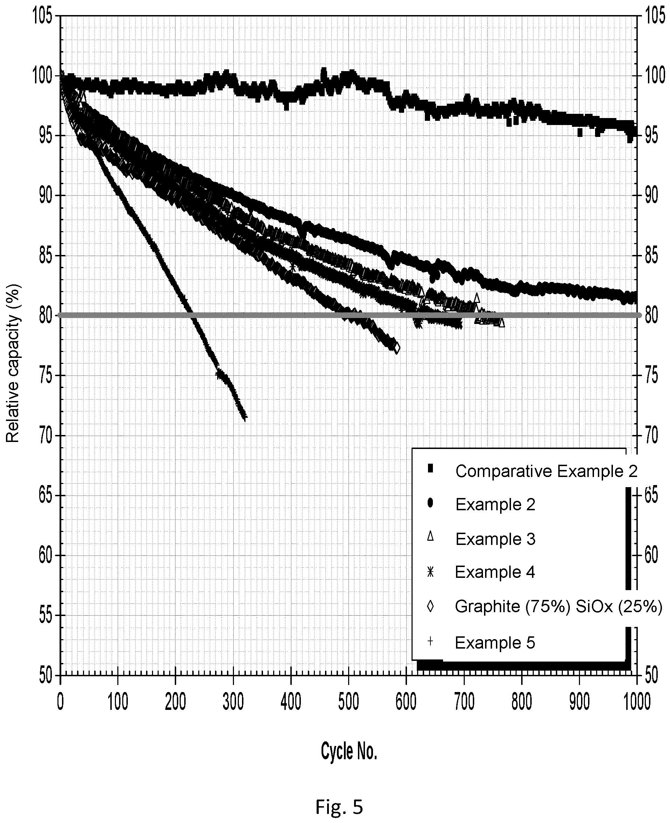

Fig. 5 depicts the relative capacity over the number of cycles of each combinational ratio of anode active materials. The cycle characteristics were excellent, particularly when the silicon suboxide wt% was between 10% to 25%, even with 500 charge/discharge cycles as shown in Fig. 5.

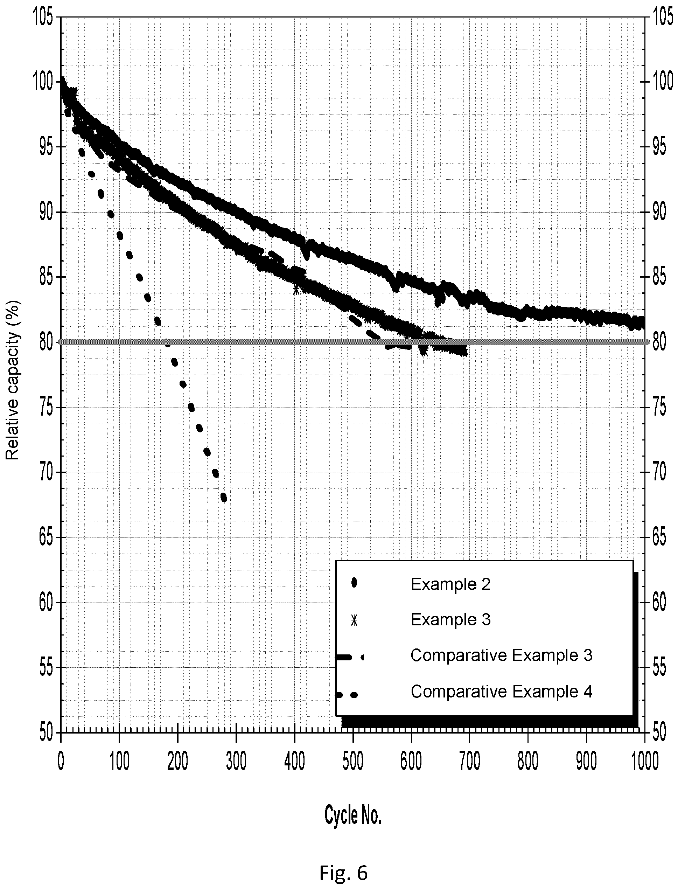

Fig. 6 depicts the relative capacity over the number of cycles of each combinational ratio of anode active materials and the use of PI-based binders. The example with the use of PI-based binders showed a remarkable increase in cycle characteristics compared to the conventional CMC/SBR binder.

### Examples 6-9

The adhesion between an anode mixture and a current collector varies depending on the degree of imidization of PAM, thereby showing different electrical properties of the secondary lithium batteries. The electrical properties improved when the PI-based binders had a degree of imidization between 15% and 100%, in particular between 15% and 50%.

The degree of imidization of the PI-based binder varied depending on the vacuum drying temperature at the time of preparing an anode. The degree of imidization may be adjusted using the ratio of combinational anode active materials of silicon suboxide (15%) : graphite (85%). Specifically, the overall ratio was anode active materials (95%) : binder (5%), and the anode mixture was applied onto a current collector (Cu-foil) and oven dried in a convection oven at 120 °C for 5 minutes and vacuum dried at a temperature of the imidization process for 10 hours. TABLE 4 shows numerical results of imidization of Examples 6 through 9.

**TABLE 4**

| | Vacuum Drying Temperature (°C) | Imidization Ratio (%) |
|---|---|---|
| Example 6 | 120 | 19.76 |
| Example 7 | 150 | 43.99 |
| Example 8 | 190 | 77.3 |
| Example 9 | 400 | 100 |

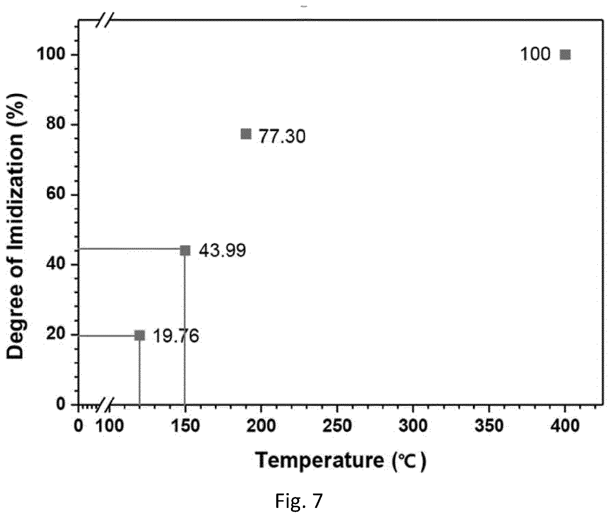

In Fig. 7, the degree of imidization was calculated from the intensity of the IR peaks. The C=O bond of asymmetrical stretching is shown at 1773 1/centimeters (cm⁻¹) peak and the C-C bond stretching of p-substituted benzene is shown at 1510 cm⁻¹ peak. A temperature above 350 °C means that the PAM is completely converted to polyimide. The degree of imidization was calculated at each temperature of 120 °C (Example 6), 150 °C (Example 7), and 190 °C (Example 8). At a temperature above 400 °C, the degree of imidization is 100% which means polyamic acid is completely converted to polyimide. Partially imidized PAM, preferably from 15% to 50%, is desirable to use as a binder with silicon suboxide active material.

The test of adhesion for Examples 6 to 8 mentioned above was measured in the measurement apparatus of universal testing machine. 3M scotch #610 tape was adhered to the mixture of anode, and the anode was cut into specimens each having a 12.5 millimeter (mm) width. After peeling of the end of the tape by 30 mm, both ends of the tape and the anode were fixed by pulling in at a 180 degree angle using a UTM jig. Peel-off strength was measured at a strength of 300 mm/min and the results are presented in TABLE 5.

**TABLE 5**

| | Peel-off strength [N/cm] |
|---|---|
| Example 6 | 1.76 |
| Example 7 | 2.06 |
| Example 8 | 0.20 |

An anode from Examples 6 to 8, a reference electrode and an electrolyte constituted a half-cell, and the specific capacity was measured from the prepared half-cell at 0.1C, the results of which are presented in TABLE 6. The half-cell reference electrode was Li-metal (FMC) and the electrolyte was 1.15M LiPF₆ in the solvent EC : EMC = 1 : 7.

**TABLE 6**

| | Specific capacity (mAh/g) |
|---|---|
| Example 6 | 452.1 |
| Example 7 | 453.9 |
| Example 8 | 440.3 |

The specific capacity was excellent when the degree of imidization was between 15% and 50%.

An anode from Examples 6 to 8, the reference electrode and an electrolyte constituted a full-cell, and the change in relative capacity was measured from the prepared full-cell with a repeated charge/discharge cycle. A ratio of NMC622 (KHX12/Umicore) was used for the cathode active material, and aluminum foil (20 µm from *ShamA Aluminum*) was used for the cathode current collector. The cathode combinational ratio was NMC622 94% + Denka Black 3% + PVFd 3%. The electrolyte was 1.15M of LiPF₆ in the solvent EC : EMC = 1 : 7.

The test conditions of the experiment were the charging method of CCCV, 10C, 4.2 V, 1/20C cut-off, rest time for 10 minutes, and the discharging method of CC, 1.0 V, 2.7 V cut-off. TABLE 7 shows the relative capacity after 100 cycles.

**TABLE 7**

| | Relative capacity after 100 cycles (%) |
|---|---|
| Example 6 | 93.6 |
| Example 7 | 94.9 |
| Example 8 | 88.4 |

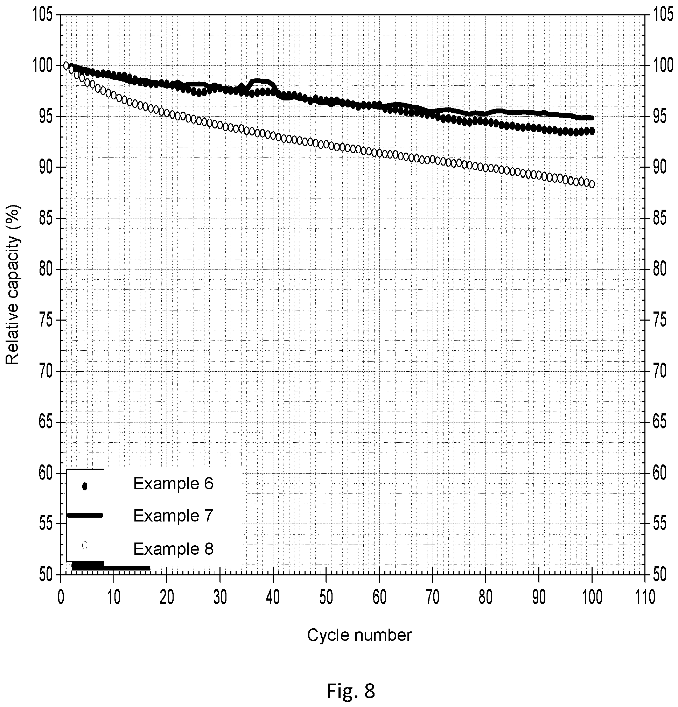

In Fig. 8, the cycle characteristic was excellent when the degree of imidization was between 15% and 50% (Examples 6 and 7). When the degree of imidization was 80% or less (Example 8), the relative capacity of 80% or more was maintained, even after 100 charge/discharge cycles. Also, when the degree of imidization was 50% or less (Examples 6 and 7), the relative capacity of 90% or more was maintained, even after 100 charge/discharge cycles.

The imidization status of PAM may be regarded as an increasing crosslinking rate. The increasing degree of imidization may lead to a consistent increase in strength (such as peel off strength) and adhesion between the anode active material layer and the current collector, but over-imidization may lead to a deterioration of this adhesion. The electrical performance of secondary lithium batteries heavily relies on the adhesion between the anode active material layer and the current collector.

### Properties of PI-based binders

The PI-based binders have excellent adhesion and process handling properties and may improve adhesion in certain ranges of tensile strength and elongation and electrical properties.

Viscometer (Brookfield viscometer / DV2T Pin Type: No.64) was used for measuring the viscosity at 22 ~ 26 °C in the range from 3500 to 8000 cP. A universal testing machine was used to measure the tensile strength and elongation, and the results are shown in TABLE 8. A specimen of 10 mm width, 15 µm thickness, and 50 mm length was prepared and measured at 20 mm/min in a cross head speed.

**TABLE 8**

| Viscosity (cP) | Solid contents (%) | Tensile strength [MPa] | Elongation [%] |
|---|---|---|---|
| 3,000 | 25 | 69 | 7 |
| 3,500 | 8.7 | 74 | 30 |
| 5,000 | 9.2 | 91 | 40 |
| 7,000 | 10.0 | 92 | 40 |
| 10,000 | 16.3 | 66 | 15 |

The lifetime characteristic was excellent when the tensile strength of the PI-binder is at least 70 MPa and less than 100 MPa. The lifetime characteristic was excellent when the elongation of the PI-binder is at least 20%, and less than 55%.

Although the subject matter has been described in language specific to structural features and/or methodological acts, it is to be understood that the subject matter defined in the appended claims is not necessarily limited to the specific features or acts described above. Rather, the specific features and acts described above are disclosed as exemplary forms of implementing the claims.

Clauses:
Clause 1. An anode comprising a silicon-based anode active material and an elastic polyimide (PI)-based binder.
Clause 2. The anode of clause 1, wherein the silicon-based anode active material is selected from the group consisting of silicon suboxide, silicon carbonate, and silicon alloy.
Clause 3. The anode of clause 1, wherein the silicon-based anode active material is silicon suboxide.
Clause 4. The anode of any one of clauses 1 to 3, wherein the elastic PI-based binder has a degree of imidization between 15% and 100%.
Clause 5. The anode of any one of clauses 1 to 3, wherein the elastic PI-based binder has a degree of imidization between 15% and 50%.
Clause 6. The anode of any one of clauses 1 to 5, wherein the PI-based binder has the structure: 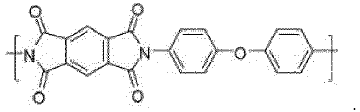
Clause 7. A method of preparing an anode comprising:
   preparing an elastic PI-based binder by curing polyamic acid with heat and/or with a catalyst; and
   combining the elastic PI-based binder with a silicon-based anode active material.
Clause 8. The method of clause 7, further comprising preparing the polyamic acid by mixing a diamine monomer and a tetracarboxylic dianhydride monomer.
Clause 9. The method of clause 8, wherein the diamine monomer is phenylenediamine.
Clause 10. The method of clause 8, wherein the tetracarboxylic dianhydride monomer is biphenyl-tetracarboxylic acid dianhydride.
Clause 11. The method of any one of clauses 7 to 10, wherein the silicon-based anode active material is selected from the group consisting of silicon suboxide, silicon carbonate, and silicon alloy.
Clause 12. The method of any one of clauses 7 to 10, wherein the silicon-based anode active material is silicon suboxide.
Clause 13. The method of any one of clauses 7 to 12, wherein the polyamic acid is cured at a temperature of 250 to 450 degrees Celsius to form the PI-based binder.
Clause 14. The method of any one of clauses 7 to 13, wherein the polyamic acid is cured with a catalyst.
Clause 15. The method of clause 14, wherein the catalyst comprises N,N'-dimethylethanolamine.
Clause 16. The method of any one of clauses 7 to 15, wherein the polyamic acid is soluble in water and in N-methyl pyrrolidone.
Clause 17. The method of any one of clauses 7 to 16, wherein the polyamic acid has an imidization ratio of from about 50% to about 90% at a curing temperature of 150 degrees Celsius or less.
Clause 18. A lithium secondary battery comprising a case, a positive terminal, a cathode, a separator, an electrolyte, a negative terminal and an anode, wherein the anode comprises a silicon-based anode active material and an elastic polyimide (PI)-based binder.
Clause 19. The lithium secondary battery of clause 18, wherein the silicon-based anode active material is selected from the group consisting of silicon suboxide, silicon carbonate, and silicon alloy.
Clause 20. The lithium secondary battery of clause 18, wherein the silicon-based anode active material is silicon suboxide.
Clause 21. The lithium secondary battery of any one of clauses 18 to 20, wherein the elastic PI-based binder has a degree of imidization between 15% and 100%.
Clause 22. The lithium secondary battery of any one of clauses 18 to 20, wherein the elastic PI-based binder has a degree of imidization between 15% and 50%.
Clause 23. The lithium secondary battery of any one of clauses 18 to 22, wherein the PI-based binder has the structure:

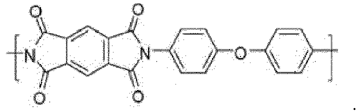

## Claims

1. An anode comprising a silicon-based anode active material and an elastic polyimide (PI)-based binder.

2. The anode of claim 1, wherein the silicon-based anode active material is selected from the group consisting of silicon suboxide, silicon carbonate, and silicon alloy.

3. The anode of any one of claims 1 to 2, wherein the elastic PI-based binder has a degree of imidization between 15% and 50%.

4. The anode of any one of claims 1 to 3, wherein the PI-based binder has the structure:

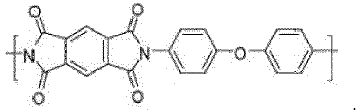

5. A method of preparing an anode comprising:
preparing an elastic PI-based binder by curing polyamic acid with heat and/or with a catalyst; and
combining the elastic PI-based binder with a silicon-based anode active material.

6. The method of claim 5, further comprising preparing the polyamic acid by mixing a diamine monomer and a tetracarboxylic dianhydride monomer.

7. The method of claim 6, wherein the diamine monomer is phenylenediamine.

8. The method of claim 6, wherein the tetracarboxylic dianhydride monomer is biphenyl-tetracarboxylic acid dianhydride.

9. The method of any one of claims 5 to 8, wherein the silicon-based anode active material is selected from the group consisting of silicon suboxide, silicon carbonate, and silicon alloy.

10. The method of any one of claims 5 to 9, wherein the polyamic acid is cured at a temperature of 250 to 450 degrees Celsius to form the PI-based binder.

11. The method of any one of claims 5 to 10, wherein the polyamic acid is cured with a catalyst.

12. The method of claim 11, wherein the catalyst comprises N,N'-dimethylethanolamine.

13. The method of any one of claims 5 to 11, wherein the polyamic acid is soluble in water and in N-methyl pyrrolidone.

14. The method of any one of claims 5 to 11, wherein the polyamic acid has an imidization ratio of from about 50% to about 90% at a curing temperature of 150 degrees Celsius or less.

15. A lithium secondary battery comprising a case, a positive terminal, a cathode, a separator, an electrolyte, a negative terminal and the anode as defined in any one of claims 1 to 4.
